# EUROPÄISCHE PATENTANMELDUNG

(11) **EP 1 361 545 A2**
(43) Veröffentlichungstag der Anmeldung: **12.11.2003**
(21) Anmeldenummer: 03009490.8
(22) Anmeldetag: 26.04.2003
(51) Int. Cl.: G07C 3/00

(54) **Vorrichtung zur Identifikation von Objekten, die mit einem Transponder versehen sind**

(30) Priorität: 02.05.2002 DE 20206968 U; 11.04.2003 DE 20305844 U
(71) Anmelder: Huf Tools GmbH, 42551 Velbert (DE)
(72) Erfinder: Schröter, Veit, 40764 Langenfeld (DE); Lüthe, Detlef, 42555 Velbert (DE)
(74) Vertreter: Mentzel, Norbert, Dipl.-Phys.

(57) **Zusammenfassung**

Bei einer Vorrichtung zur Identifikation von Objekten wird ein Transponder (14) am Objekt angebracht, welcher sich bewegt. Dabei kommuniziert der Transponder (14) über eine Antenne (18) mit einem Lesegerät (23). Über Steuermittel werden die vom Lesegerät kommenden Daten ausgewertet und Aktuatoren betätigt. Um eine raumsparende, preiswerte Vorrichtung zu ermitteln wird vorgeschlagen, in einem gemeinsamen Gehäuse (25) folgende Baueinheit (20) anzuordnen. Diese umfassen eine Hauptplatine (50) mit einem MPC (55), welche auf einer Platinen-Vergrößerung (51) Treiber-ICs (54) aufweist. Auf einer zweiten Vergrößerung (52) der Hauptplatine (50) ist auch das Lesegerät (23) integriert. Neben der Hauptplatine (50) sitzt im Kombigehäuse (25) auch noch eine Anschlussplatine (45) mit digitalen Ein und Ausgängen (46.1 bis 46.5), (Fig. 2).

## Beschreibung

Die Erfindung richtet sich auf eine Vorrichtung der im Oberbegriff des Anspruches 1 angegebenen Art. Solche Vorrichtungen werden z.B. in einem Instandhaltungssystem für Formen benutzt, wobei in den Formen durch Druckguss Produkte erstellt werden. Eine weitere Verwendungsmöglichkeit ist eine Fertigungsstraße für Produkte, die auf einer Bahn unmittelbar oder mittels eines Trägers zwischen verschiedenen Arbeitsstationen transportiert werden. Im letztgenannten Fall ist der Transponder an der Form oder an dem Träger befestigt.

Bei der bekannten Vorrichtung dieser Art ist zwischen dem Lesegerät einerseits und einer Datenbank bzw. einem Leitrechner andererseits ein PC angeordnet, über welchen die erforderlichen Steuerungen an die diversen Komponenten des Systems weitergegeben werden. Angewendet auf das vorerwähnte Instandhaltungssystem wird auf dieser Weise festgestellt, wann die Formen so weit verbraucht sind, dass keine einwandfreien Produkte mehr mit ihnen spritzgegossen werden können. Dann sorgt der PC für eine Aussortierung dieser Form aus dem System. Nachteilig sind in diesem System die zahlreichen Bauteile, ihr Platzaufwand und ihre mühsame, zeitaufwendige Verdrahtung. Die bekannte Vorrichtung ist teuer.

Der Erfindung liegt die Aufgabe zugrunde, eine zuverlässige, raumsparende Vorrichtung der im Oberbegriff des Anspruches 1 genannten Art zu entwickeln, die sich preiswert herstellen lässt. Dies wird erfindungsgemäß durch die im Anspruch 1 genannten Maßnahmen erreicht, denen folgende besondere Bedeutung zukommt.

Eine wesentliche Platzersparnis und Vereinfachung ergibt sich, weil eine Baueinheit hergestellt wird, bestehend aus dem Lesegerät, einem MPC, welcher auch als "embedded-PC" bezeichnet wird, aus Treiber-ICs und aus digitalen Ein- und Ausgängen. Diese Bauteile werden in einem gemeinsamen Gehäuse angeordnet, welches daher nachfolgend kurz "Kombigehäuse" bezeichnet werden soll. Dazu braucht nur die den MPC tragende Platine eine erste Platinenvergrößerung aufzuweisen, auf welcher diese Treiber-ICs sitzen. Daneben hat die Hauptplatine aber auch eine zweite Vergrößerung, auf welcher das Lesegerät integriert ist. Die digitalen Ein- und Ausgänge befinden sich auf einer neben dieser Hauptplatine angeordneten Anschlussplatine, welche, wie gesagt, ebenfalls im Kombigehäuse untergebracht ist. Das damit erreichte Kompaktgehäuse ist so klein, dass es ohne Weiteres auch an jenen horizontalen Schienen angebracht werden kann, auf welchen sich die Transportbahn für das Produkt oder für den Träger des Produkts befindet. Die genannten elektronischen Bauteile lassen sich auf der Hauptplatine und Anschlussplatine zügig und platzsparend montieren, wobei die beiden Platinen miteinander einfach elektrisch zu verbinden sind. Die sich dabei ergebenden Buchsen der seriellen Schnittstellen sowie der digitalen Standardanschlüsse befinden sich dann an der Außenseite des Kombigehäuses und lassen sich leicht kontaktieren.

Weitere Maßnahmen und Vorteile der Erfindung ergeben sich aus den Unteransprüchen, der nachfolgenden Beschreibung und den Zeichnungen. In den Zeichnungen ist die Erfindung in zwei Ausführungsbeispielen dargestellt. Es zeigen:
- Fig. 1,: schematisch, eine mehrere Stationen umfassende Fertigungsstraße für ein Produkt,
- Fig. 2,: schematisch, teilweise im Blockschaltbild und in nicht maßstabsgerechter Darstellung, die erfindungsgemäße Baueinheit in einem im Längsschnitt dargestellten Kombigehäuse sowie einen produktseitig anzuordnenden Transponder mit zugehörigen Kommunikationsmitteln,
- Fig. 3,: in perspektivischer Darstellung, das Kombigehäuse nach der Erfindung mit der darin integrierten Baueinheit und
- Fig. 4: die schematische Darstellung eines zweiten Ausführungsbeispiels der erfindungsgemäßen Vorrichtung, nämlich eines Logistiksystems für eine Produktsteuerung.

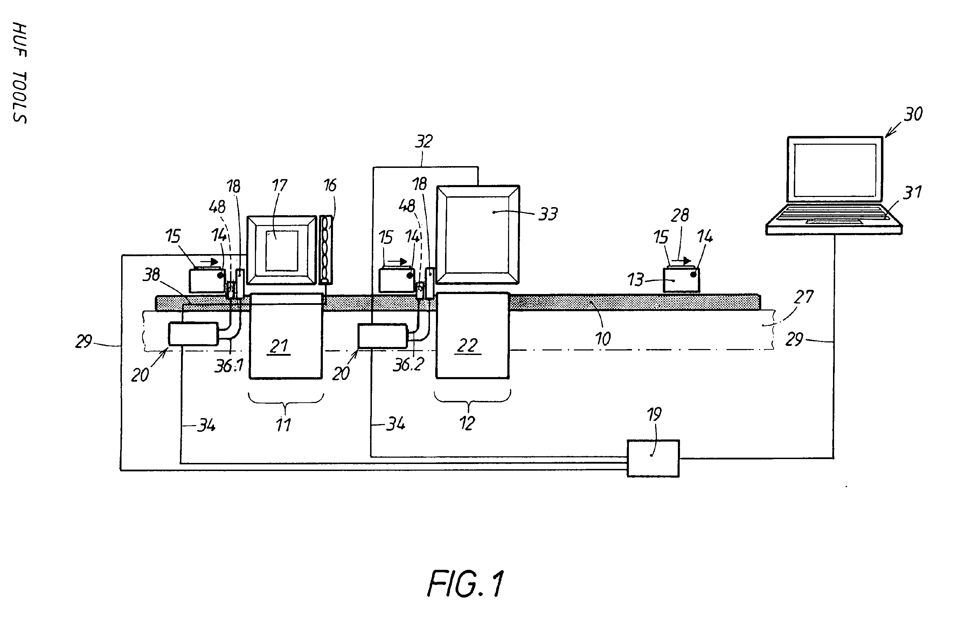

Beim ersten Ausführungsbeispiel gemäß Fig. 1 werden auf einem Band 10 Produkte 15 im Sinne des Pfeils 28 bewegt und dabei an verschiedenen Stationen 11, 12 vorbeigeführt, wo sie im Zuge ihrer Fertigung behandelt werden. Der Transport 28 der einzelnen Produkte 15 erfolgt hier mittelbar, nämlich jeweils über einen das Produkt 15 aufnehmenden Werkstückträger 13 an dem ein Transponder 14 sitzt. An jeder der Stationen 11, 12 befinden sich Aktuatoren 21, 22, welche in definierter Weise auf das entstehende Produkt 15 einwirken. In den Stationen 11, 12 von denen nur zwei beispielsweise gezeigt sind, erfährt das Produkt auf seinem Bewegungspfad eine Behandlung, oder es wird dort hinsichtlich seiner Qualität oder seinen Eigenschaften geprüft und entsprechend dem Prüfungsergebnis weiterbehandelt, ausgebessert oder aussortiert.

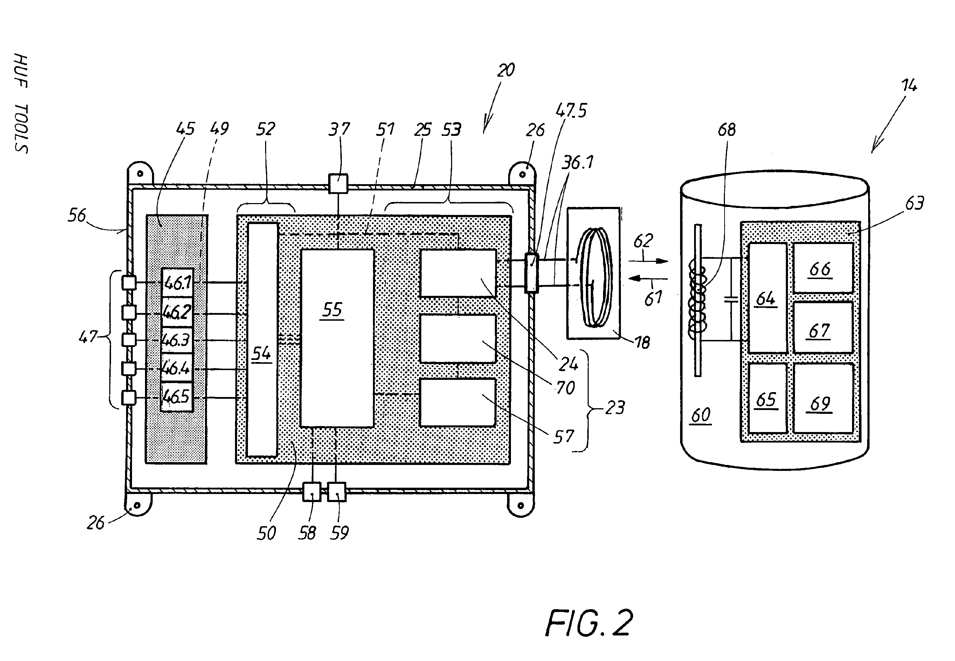

In der Station 11 ist ein Arbeitsplatz ohne Maschinensteuerung dargestellt. Der Bedienungsperson steht zur Steuerung der Aktuatoren 21 ein Tastenfeld 16 zur Verfügung. Unterstützt wird dies durch einen mit einem Display 17 ausgerüsteten Rechner. Der Transponder 14 dient zur Identifikation des vom Werkstückträger 13 aufgenommenen Produkts 15. Der Transponder 14 beinhaltet in einem Speicher verschiedenste Daten. Außer den das Produkt 15 kennzeichnenden Daten kann der Transponder auch Daten zur vorgenannten Behandlung und Prüfung des Produkts 15 an den verschiedenen Stationen 11, 12 aufweisen. Dabei können im Transponder 14, z.B. auch die in der Vergangenheit vollzogenen Arbeitsgänge datenmäßig erfasst sein. Die Anwesenheit eines Produkts an jeder der Stationen 11, 12 wird mittels des jeweiligen Transponders 14 durch eine Antenne 18 erfasst, die über eine Leitung 36.1 an eine besondere Baueinheit 20 angeschlossen ist, deren innerer Aufbau und Wirkungsweise anhand der Fig. 2 näher erläutert werden soll.

In Fig. 2 ist ein geöffnetes Kombigehäuse 25 gezeigt, welches über Laschen 26 an einer Schiene 27 befestigt werden. Die Schiene 23 trägt die Transportbahn 10 und dient im Bereich jeder Station 11, 12 zur Befestigung der Antenne 18. Außerdem ist kurz vor jeder Antenne 18 auch noch ein Sensor 48 an der Transportbahn 27 befestigt, welcher auf das in seinen Wirkbereich gelangende Produkt 15 bzw. den Produkt-Träger 13 anspricht. Dieser Sensor 48 kann z.B. aus einer Lichtschranke bestehen, welche über eine weitere Leitung 36.2 mit der Baueinheit 20 verbunden ist.

Das Kombigehäuse 25 der Baueinheit 20 beinhaltet zunächst eine durch grobe Punktschraffur hervorgehobene Hauptplatine 50 mit zahlreichen Leiterbahnen, von denen nur einige, für das Verständnis der Erfindung bedeutsame Leiterbahnen 51 angedeutet sind. Auf der Hauptplatine 50 sitzt, schematisch mit 55 bezeichnet, ein in Black-Box-Darstellung verdeutlichter MPC. Der MPC besitzt, wie üblich, Speicher, Programme, eine Rechnereinheit u. dgl.. Die Hauptplatine 50 ist mit zwei Vergrößerungen 52, 53 versehen, die hier einfach aus Verlängerungen der Hauptplatine 50 gebildet sind. Auf der ersten Vergrößerung 52 befinden sich eine Schar von Treiber-ICs 54, die hier auch nur in einer Black Box-Darstellung gezeichnet sind.

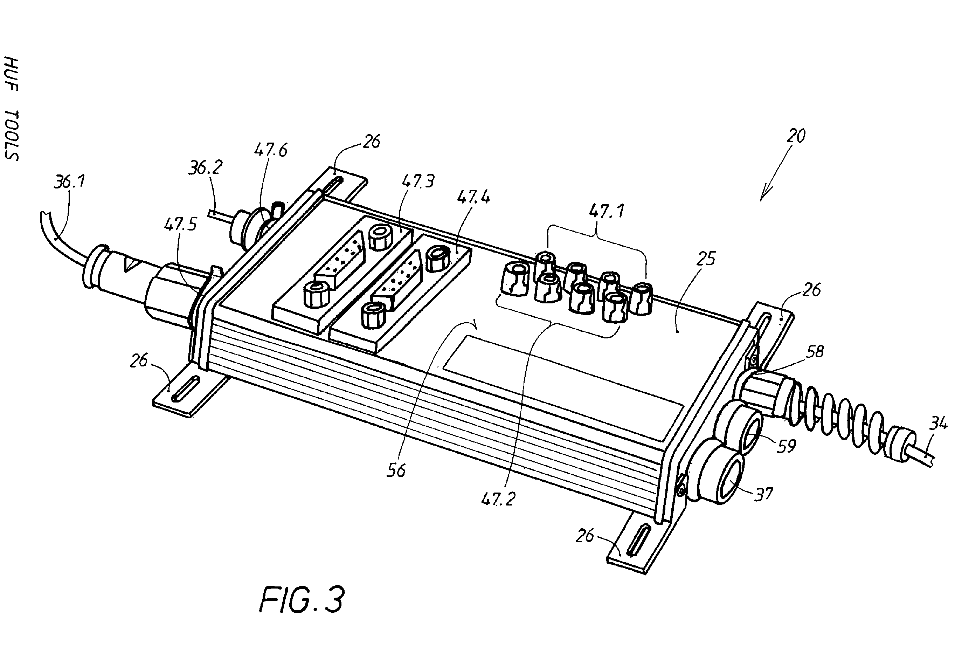

Im Kombigehäuse 50 befindet sich, der Hauptplatine 50 unmittelbar benachbart, eine Anschlussplatine 45, die in Fig. 2 durch eine feine Punktschraffur hervorgehoben ist. Auch die Anschlussplatine 25 besitzt zahlreiche Leiterbahnen, von denen auch in diesem Fall nur einige, für das Verständnis der Erfindung bedeutsame Leiterbahnen 49 angedeutet sind. Auf der Anschlussplatine sitzen, schematisch mit 46.1 bis 46.5 bezeichnet, digitale Standardanschlüsse, die auch als DIOs bezeichnet werden. Die zugehörigen Buchsen 47 der Standardanschlüsse sitzen an der Außenseite 56 des Kombigehäuses 25. Ein konkretes Ausführungsbeispiel der Baueinheit 20 ist aus Fig. 3 zu erkennen, wo, in perspektivischer Darstellung, wo das Kombigehäuse 25 mit seiner Außenseite 56 gezeigt ist. Daraus sind folgende Einzelheiten zu erkennen, die auch im Schema von Fig. 2 angedeutet sind.

Zunächst gibt es, gemäß Fig. 3 vier einzelne, mit 47.1 gekennzeichnete digitale Eingänge und vier Ausgänge 47.2 für verschiedene Aktuatoren. Außerdem sitzt an der Gehäuseaußenseite 26 auch noch eine Kombibuchse 47.3 mit acht digitalen Eingängen und eine weitere Kombibuchse 47.4 mit vier Eingängen und vier Ausgängen der DIOs. An der einen Schmalseite des Kombigehäuses 25 befinden sich zwei weitere mit 47.5 und 47.6 gekennzeichnete Eingangsbuchsen. Die eine Eingangsbuchse 57.2 dient zum Anschluss der elektrischen Leitung 36.1 der beschriebenen Antenne 18, während die andere Buchse 47.6 als Eingang für den erwähnten Sensor 48 fungiert.

An der gegenüberliegenden Schmalseite des in Fig. 3 gezeigten Kombigehäuses 25 befindet sich zunächst ein Netzanschluss 37 für die Spannungsversorgung der im Gehäuseinneren befindlichen elektronischen Bauteile. Außerdem sitzen dort zwei Schnittstellen 58, 59, welche, gemäß Fig. 2, vom mit 55 bezeichneten MPC beaufschlagt werden. Die erste Schnittstelle 58 ist ein Ethernet, die zum Anschluss eines in Fig. 1 erkennbaren Netzwerks 19 über die Leitung 34 dient. Die andere serielle Schnittstelle 59 besteht aus einem RS 232 und dient zum Anschluss verschiedener Peripheriegeräte, wie einer Kamera, einer Tastatur, einem Drucker oder einer Anzeige.

An die erwähnte zweite Platinenverlängerung 52 der Hauptplatine 50 ist ein Lesegerät oder, wie im konkreten Fall, ein Lese- und Schreibgerät 23 integriert, das auch als "Reader" bezeichnet wird. Dieses umfasst ein Analog-Interface 24, welches über die vorbeschriebene Buchse 47.5 an die Leitungen 36.1 der Antenne 18 angeschlossen ist. Ferner gehört zum Lese- und Schreibgerät eine Firmware 70 und schließlich ein internes Interface 57, an welchem der MPC 55 angeschlossen ist.

In Fig. 2 ist auch der interne Aufbau eines Transponders 14 gezeigt, der seinerseits über eine Antenne 68 in eine dilaterale Kommunikation mit der vorbeschriebenen Antenne 18 eingeht, wie durch zwei Pfeile 61, 62 veranschaulicht ist. Diese Kommunikation besteht also aus einem Lesen 61 des Transponders 14 und einem Schreiben 62 im Transponder 14. Der Transponder 14 hat in seinem Gehäuse 60 einen mit 63 bezeichneten IC. Dieser IC 63 umfasst ein Analog-Interface 64, ein Access Control 65, einen EEPROM 66, welches als Programmspeicher dient, eine Control-Logic 67 und einen weiteren EEPROM 69 als Datenspeicher.

Das in Fig. 1 an der Station 11 gezeigte, bereits erwähnte Tastenfeld 16 ist über die dortige Leitung 38 an eine der beschriebenen Buchsen 47 angeschlossen. Die Baueinheit steuert dann über einen der genannten IO-ICs den Aktuator 21 an. Vom in Fig. 1 gezeigten Netzwerk 19 kann eine elektrische Leitung 29 zum Rechner bzw. Display 17 gehen. Das Netzwerk 19 steht über eine Sammelleitung 29 mit einem Leitrechner 30 in Verbindung. Der Leitrechner 30 ist über eine Tastatur 31 bedienbar und kann an eine Datenbank angeschlossen sein.

Bei der in Fig. 2 gezeigten zweiten Station 12 liegt eine vergleichbare Konfiguration wie in Station 11 vor. Die zweite Station 12 ist allerdings als Maschinensteuerung ausgebildet. Einer der Ausgänge 47 der zugehörigen Baueinheit 20 ist über eine Leitung 32 mit einer Maschinensteuerung 33 verbunden. Auch hier ist die Baueinheit 20 über eine elektrische Leitung 34 mit dem Netzwerk 19 verbindbar.

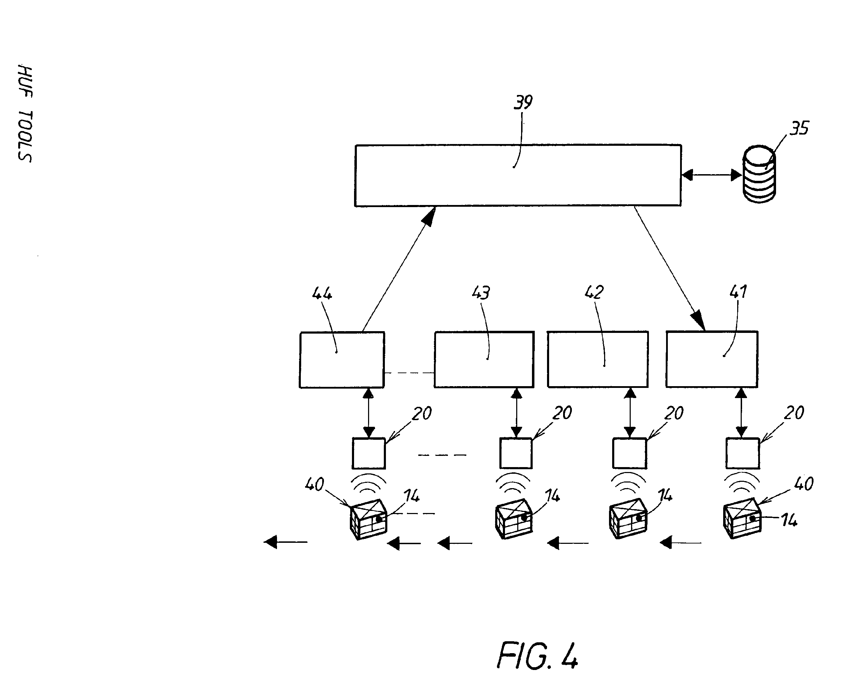

Im Ausführungsbeispiel von Fig. 4 ist ein Logiksystem für die Behandlung einer Warenpackung 40 in verschiedenen Stationen 41 bis 44 veranschaulicht. An oder in der Warenpackung 40, die auch ein Behälter sein kann, befindet sich wieder ein Transponder 14, der hier als produktionssteuernder Informationsträger dient. Die erste Station 41 ist eine Leergut-Station. Hier wird wieder über ein Schreib/Lesegerät einer schematisch angedeuteten Baueinheit 20 die Packung 40 erfasst und/oder gekennzeichnet.

An einer zweiten Station 42 wird die Ware in die Packung 40 eingefüllt. Alternativ kann hier, an mehreren Stationen, ein ganzer Produktionsablauf erfasst werden. Die gefüllte Packung 40 wird gekennzeichnet, was wieder über die dort vorgesehene Baueinheit 20 geschieht. Die dort befindliche Warenpackung 40 wird versandfertig gemacht und mit entsprechenden Adressen des Empfängers versehen.

So gelangt schließlich die Warenpackung 40 zur letzten, in Fig. 4 gezeichneten Station 44, die dem Wareneingang bei einem Kunden entspricht. Dieser verfügt seinerseits über eine Baueinheit 20 der beschriebenen Art, wo das Lese-/Schreibgerät die Daten des Transponders 14 erkennt und im zugehörigen Controller auswertet. Ist das geschehen, so ist die Ware zum Verkauf freigegeben. In Fig. 4 ist die Wechselwirkung zwischen den verschiedenen Bauteilen durch Pfeile veranschaulicht. Diese sind über ein schematisch angedeutetes Netzwerk 39 mit einer Datenbank 35 in Verbindung.

Die erfindungsgemäße Vorrichtung hat ein weites Anwendungsfeld. Genannt werden soll die Anwendung in einem Formen-Instandhaltungssystem, wo die Formen, z.B. zum Spritzgießen von Werkstücken verwendet werden. Die Formen haben nur eine bestimmte Lebensdauer. Deswegen wird an den Formen bzw. ihren Werkstückträgern ein Transponder angebracht, der die sogenannte "Schusszahl" erfasst und diese dem Lese- und/oder Schreibgerät einer erfindungsgemäßen Baueinheit 20 zur Identifikation sowie zur Auswertung zur Verfügung stellt.

### Bezugszeichenliste:

- 10: Band, Transportbahn
- 11: erste Station
- 12: zweite Station
- 13: Werkstückträger für 15
- 14: Transponder an 13
- 15: Produkt
- 16: Tastenfeld bei 11
- 17: Display/Rechner
- 18: Antenne für 14
- 19: Netzwerk
- 20: Baueinheit
- 21: Aktuator bei 11
- 22: Aktuator bei 12
- 23: Lese- und Schreibgerät in 20
- 24: Analog-Interface von 23
- 25: Kombigehäuse für 20
- 26: Lasche an 25
- 27: Schiene an 10
- 28: Pfeil der Bewegung von 15, Transportpfeil
- 29: elektrische Leitung zwischen 30, 19
- 30: Leitrechner
- 31: Tastatur für 30
- 32: elektrische Leitung zwischen 33 und 20 bei 12
- 33: Maschinensteuerung
- 34: elektrische Leitung zwischen 20 und 19 bei 11, 12 (Fig. 1)
- 35: Datenbank (Fig. 4)
- 36.1: elektrische Leitung zwischen 18 und 20 (Fig. 1)
- 36.2: elektrische Leitung zwischen 48 und 20 (Fig. 1)
- 37: Netzanschluss (Fig. 2)
- 38: elektrische Leitung an 28 zwischen 16 und 20 (Fig. 1)
- 39: Netzwerk (Fig. 4)
- 40: Behälter, Warenpackung (Fig. 4)
- 41: erste Station, Leergut-Station (Fig. 4)
- 42: zweite Station, Produktbestand (Fig. 4)
- 43: dritte Station, Versand (Fig. 4)
- 44: vierte Station, Wareneingang (Fig. 4)
- 45: Anschlussplatine
- 46.1: Standardanschluss, DIO
- 46.2: Standardanschluss, DIO
- 46.3: Standardanschluss, DIO
- 46.4: Standardanschluss, DIO
- 46.5: Standardanschluss, DIO
- 47: Buchsen (Fig. 2)
- 47.1: Eingangsbuchsen von 47 (Fig. 3)
- 47.2: Ausgangsbuchsen von 47 (Fig. 3)
- 47.3: Kombibuchse für 47 (Fig. 3)
- 47.4: Kombibuchse von 47 (Fig. 3)
- 47.5: Eingangsbuchse von 47 (Fig. 3)
- 47.6: Eingangsbuchse von 47 (Fig. 3)
- 48: Sensor (Fig. 1)
- 49: Leiterbahn auf 45 (Fig. 2)
- 50: Hauptplatine (Fig. 2)
- 51: Leiterbahn auf 50 (Fig. 2)
- 52: erste Vergrößerung von 50, Verlängerung (Fig. 2)
- 53: zweite Vergrößerung von 50, Verlängerung (Fig. 2)
- 54: Treiber-IC (Fig. 2)
- 55: MPC (Fig. 2)
- 56: Außenseite von 25 (Fig. 2, 3)
- 57: Interface von 22 (Fig. 2)
- 58: serielle Schnittstelle, Ethernet (Fig. 2, 3)
- 59: serielle Schnittstelle, RS 232 (Fig. 2, 3)
- 60: Transpondergehäuse für 14 (Fig. 2)
- 61: Lesepfeil von 23 in 14 (Fig. 2)
- 62: Schreibpfeil von 23 in 14 (Fig. 2)
- 63: IC von 14 in 60 (Fig. 2)
- 64: Analog-Interface (Fig. 2)
- 65: Access Control (Fig. 2)
- 66: EEPROM, Programmspeicher (Fig. 2)
- 67: Control-Logic (Fig. 2)
- 68: Antenne in 14 (Fig. 2)
- 69: EEPROM in 14, Datenspeicher (Fig. 2)
- 70: Firmware bei 23 (Fig. 2)

## Patentansprüche

1. Vorrichtung zur Identifikation von Objekten (13, 15), die mit einem Transponder (14) versehen sind und bewegt (28) werden,
wobei der Transponder (14) Daten enthält, die das Objekt (13, 15) kennzeichnen und/oder seine Behandlung in der Gegenwart, Vergangenheit und/oder Zukunft bestimmen oder bestimmten,
mit einer Antenne (18), die neben dem Bewegungspfad des Objektes (13, 15) angeordnet ist und mit dem Transponder (14) des in ihren Wirkbereich gelangenden Objekts (13, 15) kommuniziert,
mit einem Lesegerät (23), welches mit der Antenne (18) elektrisch verbunden ist und die Daten aus dem Transponder (14) liest,
und mit Steuermitteln, welche die vom Lesegerät (23) kommenden Daten auswerten, auf das Objekt (13, 15) rückwirkende Aktuatoren (21, 22) einschalten und/oder ausschalten und/oder Daten bzw. Ergebnisse an einen Leitrechner (30) und/oder eine Datenbank (35) weitergeben,
**dadurch gekennzeichnet ,**
**dass** in einem gemeinsamen Gehäuse (Kombigehäuse 25) eine Baueinheit (20) aus dem Lesegerät (23), aus einem MPC (55), aus einem Treiber-IC (54) und aus digitalen Ein- und Ausgängen (46.1 bis 46.5) angeordnet ist,
wobei eine den MPC (55) tragende Hauptplatine (50) eine erste Platinen-Vergrößerung (51) zur Integration von Treiber-ICs (54) aufweist
und auf einer zweiten Vergrößerung (52) der Hauptplatine (50) das Lesegerät (23) integriert ist,
**dass** im Kombigehäuse (25) neben dieser Hauptplatine (50) auch eine Anschlussplatine (45) mit digitalen Ein- und Ausgängen (46.1 bis 46.5) für die Aktuatoren (21, 22) und/oder für die Antenne (18) angeordnet ist,
**dass** im MPC (55) Steuerprogramme für die Antenne (18), das Lesegerät (23), die Aktuatoren (21, 22) und/oder die Datenbank (35) und/oder den Leitrechner (30) integriert sind,
und **dass** das Kombigehäuse (25) außer den digitalen Ein- und Ausgängen (47) der Anschlussplatine (45) auch noch die vom MPC (55) kommenden seriellen Schnittstellen (58, 59) für ein Netzwerk (19) und/oder für den Leitrechner (30) und/oder für die Datenbank (35) und/oder für Sensoren (48) besitzt.

2. Vorrichtung nach Anspruch 1, **dadurch gekennzeichnet, dass** das Lesegerät (23) zugleich als Schreibgerät ausgebildet, im Kombigehäuse (25) angeordnet und mit dem MPC (24) baueinheitlich verbunden ist
und dass das Schreib-Lesegerät (23) Daten im Transponder (14) hinzufügt, ändert und/oder löscht,
welche die Baueinheit (20) mittels der am Kombigehäuse (25) sitzenden digitalen Ein- und Ausgängen und Schnittstellen von der Antenne (18), den Aktuatoren (21, 22) und/oder dem Leitrechner (30) und/oder von Sensoren (48) und/oder von der Datenbank (35) empfängt.

3. Vorrichtung nach Anspruch 1 oder 2, **dadurch gekennzeichnet, dass** außer der auf den Transponder (14) ansprechenden Antenne (18) noch ein zusätzlicher Sensor (48) angeordnet ist,
der auf das in seinen Wirkbereich gelangende Objekt (13, 15) anspricht und im Ansprechfall das Lesegerät (23) und/oder das Schreib-Lesegerät wirksam setzt.

4. Vorrichtung nach einem der Ansprüche 1 bis 3, **dadurch gekennzeichnet, dass** die seriellen Schnittstellen mindestens ein Ethernet (58) aufweist.

5. Vorrichtung nach einem der Ansprüche 1 bis 4, **dadurch gekennzeichnet, dass** die seriellen Schnittstellen (59) mindestens eine RS 232 aufweisen.

6. Vorrichtung nach einem der Ansprüche 1 bis 5, **dadurch gekennzeichnet, dass** zwei serielle Schnittstellen vorgesehen sind, von denen die eine aus einem Ethernet (58) und eine andere (59) aus einem RS 232 bestehen.

7. Vorrichtung nach einem der Ansprüche 1 bis 6, **dadurch gekennzeichnet, dass** das Objekt ein Produkt (15) oder ein das Produkt beinhaltender WerkstückTräger (13, 40) ist
und dass die Vorrichtung Bestandteil eines Logistiksystems zum Transport des Produkts (15) oder des Werkstück-Trägers (13, 40) ist.

8. Vorrichtung nach einem der Ansprüche 1 bis 7, **dadurch gekennzeichnet, dass** das Objekt ein Produkt (15) oder ein das Produkt beinhaltender Träger (13, 40) ist
und dass die Vorrichtung Bestandteil eines Formen-Instandhaltungssystems ist.

9. Vorrichtung nach einem oder mehreren der Ansprüche 1 bis 8, **dadurch gekennzeichnet, dass** die Aktuatoren zur Weichenstellung in einer Transportbahn (10) des Produkts (15) oder des Werkstückträgers (13, 40) dienen.

10. Vorrichtung nach einem der Ansprüche 1 bis 9, **dadurch gekennzeichnet, dass** die Aktuatoren zur Umlenkung des Produkts 15) oder des Werkstückträgers (13, 40) dienen.

11. Vorrichtung nach einem oder mehreren der Ansprüche 1 bis 10, **dadurch gekennzeichnet, dass** die Aktuatoren zum Stoppen und zum Weitertransport (28) des Produkts (15) oder des Werkstückträgers (13, 40) dienen.
